# EUROPÄISCHE PATENTSCHRIFT

(11) **EP 0 993 578 B1**
(45) Veröffentlichungstag und Bekanntmachung des Hinweises auf die Patenterteilung: **04.10.2006**
(21) Anmeldenummer: 99915543.5
(22) Anmeldetag: 03.03.1999
(51) Int. Cl.: F21S 13/02, F21S 4/00

(54) **VORRICHTUNG ZUR AUSBILDUNG AKTIV LEUCHTENDER LEUCHTWEGESYSTEME**
DEVICE FOR REALIZING ACTIVELY LUMINOUS ILLUMINATED ROUTE SYSTEMS
DISPOSITIF POUR CREER DES SYSTEMES LUMINEUX D'INDICATION DE PASSAGE A ECLAIRAGE ACTIF

(30) Priorität: 03.03.1998 DE 29803477 U
(43) Veröffentlichungstag der Anmeldung: 19.04.2000
(73) Patentinhaber: P.E.R. Flucht und Rettungsleitsysteme GMBH, 22885 Barsbüttel (DE)
(72) Erfinder: KROKEIDE, Gunnar, D-22885 Barsbüttel (DE)
(74) Vertreter: Stüven, Ralf
(86) Internationale Anmeldenummer: PCT/EP1999/001359
(87) Internationale Veröffentlichungsnummer: WO 1999/045313

(56) Entgegenhaltungen:
- EP-A- 0 669 492
- EP-A- 0 748 979
- DE-U- 29 803 477
- GB-A- 2 284 305
- US-A- 5 337 225
- US-A- 5 607 227

## Beschreibung

Die Erfindung betrifft eine Vorrichtung zur Ausbildung aktiv leuchtender Leuchtwegesysteme unter Verwendung eines im Querschnitt allgemein U-förmigen Aufnahmeprofils mit an den seitlichen Halteschenkeln ausgebildeter Klemmeinrichtung zur Halterung eines Abdeckstreifens eines aktiv leuchtenden Leuchtwegesystems und einer Ausnehmung zur Aufnahme von Kabeln und Leuchtdioden zur Ausbildung eines aktiv leuchtenden Leuchtwegesystems.

Eine derartige Vorrichtung ist durch die WO 97/12646 bekannt und dient vornehmlich zum Einsatz in Gebäuden und Schiffen. Bei dieser Vorrichtung ist ein allgemein U-förmiges Aufnahmeprofil vorgesehen, bei dem an den Randstreifen der Grundplatte Halteschenkel unterschiedlicher Breite vorgesehen sind. An dem kurzen Halteschenkel ist eine zum anderen Halteschenkel offene Nut ausgebildet. Der andere breite Halteschenkel weist im Abstand vom Aussenrand senkrecht zur Ebene des Halteschenkels einen zur Nut gerichteten Steg und am freien Endabschnitt einen sich über die Länge des Aufnahmeprofils erstreckenden Vorsprung auf. Zwischen Steg und Vorsprung kann ein Streifen gehalten werden, der in die Nut eingeschoben ist. Der Streifen kann aus nachleuchtendem Material bestehen oder aber ein Abdeckstreifen eines aktiv leuchtenden Leuchtwegesystems sein. Die hinter dem Streifen befindliche Ausnehmung dient zur Aufnahme von Kabeln und Leuchtdioden eines aktiv leuchtenden Leuchtwegesystems. Bei dieser Vorrichtung hat es sich jedoch gezeigt, dass eine einwandfreie Führung der Leuchtdioden eines aktiv leuchtenden Leuchtwegesystems nur schwierig herzustellen ist, so dass die Lichtausbeute beeinträchtigt wird.

Aus dem Gattungsgemässen EP 0669492 A1 ist ein aktiv leuchtendes Leuchtwegesystem bekannt, bei dem ein LED-Leiterstreifen in einer Trägerprofilleiste angeordnet ist, wobei der LED-Leiterstreifen mit einer lichtdurchlässigen Abdeckprofilleiste abgedeckt ist. Auch bei dieser bekannten Vorrichtung ist die Lichtausbeute häufig unbefriedigend.

Die EP 0748979 A3 beschreibt eine Beleuchtungsvorrichtung, bei der Leuchtdioden zur Lichtkonzentration in einzelne aus Polycarbonat-Hohlkörpern bestehende Linsen eingebracht sind, die in ein entsprechend ausgebildetes Gehäuse eingepasst sind. Das Gehäuse mit den Leuchtdioden ist wiederum in einem Kanal angeordnet, der mit einem Abdeckstreifen abgedeckt ist. Nachteilig ist hieran insbesondere, dass die Vorrichtung vergleichsweise kompliziert in der Herstellung ist und dass die Linsen sich in Ihrer Form im Wesentlichen der äußeren Form der Leuchtdioden anpassen müssen, damit diese in den Hohlkörper eingeführt werden können. Darüber hinaus geht die mittels der Linsen gewonnene höhere Lichtausbeute durch den Abdeckstreifen wieder weitgehend verloren. Ein weiterer Nachteil der in der EP 0748979 A3 beschriebenen Vorrichtung besteht darin, dass ein einfaches Nachrüsten vorhandener Anlagen nur mit erheblichem Aufwand möglich ist.

Darüber hinaus wirken die bekannten Vorrichtungen beim Einsatz in Gebäuden und Schiffen aus innenarchitektonischen Gründen häufig optisch störend.

In der GB 2284305 ist eine elektrolumineszierende Lampe beschrieben, bei der eine lichtemittierende Schicht von einer halbtransparenten einseitig metallisierten Folie abgedeckt ist, um das Erscheinungsbild der Lampe bei Tageslicht zu verbessern. Die Anordnung der Folie im Inneren eines die Lampe aufnehmenden Formkörpers unterhalb einer Abdeckung kann aber dazu führen, dass die Lampe weiterhin gut sichtbar bleibt.

Die Aufgabe der Erfindung besteht daher darin, eine Vorrichtung der eingangs genannten Art so zu verbessern, dass sie einfacher herstellbar ist, bei Aktivierung die Lichtausbeute verbessert wird und bei Nichtaktivierung eine bessere optische Integration in das räumliche Umfeld erfolgt.

Erfindungsgemäss erfolgt die Lösung der Aufgabe durch die Merkmale des Anspruchs 1.

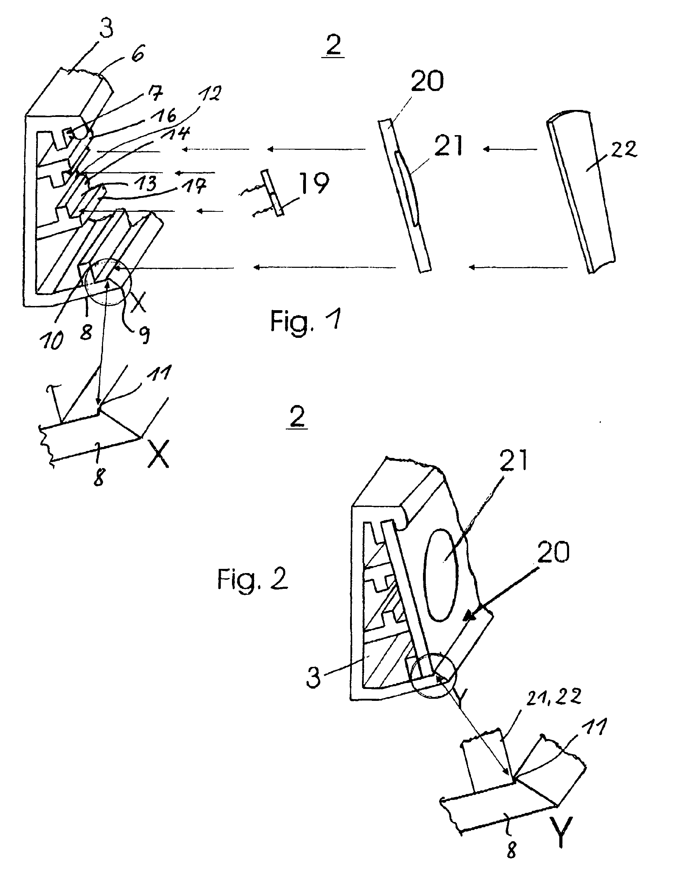

Die Erfindung wird nachstehend anhand des in der Zeichnung schematisch dargestellten Ausführungsbeispiels näher erläutert. Es zeigt
- Fig. 1 und 2: die Vorrichtung für ein aktiv leuchtendes Leuchtwegesystem in einer perspektivischen Ansicht in einer Explosionsdarstellung und in einer Zusammenbaudarstellung.

Das Aufnahmeprofil 3 der Vorrichtung 2 weist eine Grundplatte auf, an deren Randabschnitten jeweils ein Halteschenkel 6, 8 angeordnet ist. In dem Halteschenkel 6 mit geringerer Breite ist am Endabschnitt eine zum Halteschenkel 8 gerichtete Nut 7 ausgebildet. Der äussere Endabschnitt des Halteschenkels 8 ist zum Halteschenkel 6 abgewinkelt und weist einen Steg 10 auf, der zur Nut 7 gerichtet ist. Der Steg 10 ist im Abstand von dem Aussenrand 9 des Halteschenkels 8 angeordnet. An dem Aussenrand 9 befindet sich ein Vorsprung 11, der ebenfalls zur Nut 7 gerichtet ist. Zwischen Steg 10 und Vorsprung 11 kann ein Abdeckstreifen 20 des aktiv leuchtenden Leuchtwegesystems mittels einer Art Klippverbindung festgeklemmt werden, nachdem er vorher in die Nut 7 eingeschoben wurde. Dies ist in den vergrösserten Einzelheiten "X" und "Y" dargestellt. Zwischen den Halteschenkeln 6, 8 sind zwei Stege 16, 17 auf der Grundplatte ausgebildet, die im Abstand zueinander parallel zueinander angeordnet sind und parallel zum äusseren Endabschnitt des Halteschenkels 8 ausgerichtet sind. Die Stege 16, 17 bilden eine Ausnehmung 12, in der ein Absatz 13 ausgebildet ist. Der Absatz 13 ist durch zwei an Stegen 16, 17 vorragende weitere Stege gebildet. Der Absatz 13 dient zur Aufnahme eines Trägerstreifens für Kabel und Leuchtdioden 19 des aktiv leuchtenden Leuchtwegesystems. Durch den Absatz 13 ist der Trägerstreifen in Höhe und Breite eindeutig fixiert. Der Abdeckstreifen 20 weist Linsen 21 auf, die jeweils einer Leuchtdiode 19 zugeordnet werden. Hierdurch kann die Lichtausbeute der Leuchtdioden 19 vergrössert werden. Auf der Aussenfläche des Abdeckstreifens 20 wird eine verspiegelte Folie 22 angeordnet. Die spiegelnde Fläche kann durch Bedampfung hergestellt werden. Bei Aktivierung der Vorrichtung 2 tritt das Licht der Leuchtdioden 19 durch die Folie 22 und kennzeichnet so das Leuchtwegesystem. Bei Nichtaktivierung spiegeln sich auf der Folie 22 die Wandfarben wieder, so dass die Vorrichtung 2 optisch in die Wand integriert ist.

## Patentansprüche

1. Vorrichtung zur Ausbildung aktiv leuchtender Leuchtwegsysteme unter Verwendung eines im Querschnitt allgemein U-förmigen Aufnahmeprofils mit an den seitlichen Halteschenkeln ausgebildeter Klemmeinrichtung zur Halterung eines Abdeckstreifens eines aktiv leuchtenden Leuchtwegesystems und einer Ausnehmung zur Aufnahme von Kabeln und Leuchtdioden zur Ausbildung eines aktiv leuchtenden Leuchtwegesystems, bei der zwischen den beiden Halteschenkein (6, 8) des Aufnahmeprofils (3) im Abstand parallel zueinander und parallel zu dem äußeren Endabschnitt des einen Halteschenkels (8) zwei Stege (16, 17) angeordnet sind, die eine Ausnehmung (12) bilden, in der an den Stegen (16, 17) jeweils ein Absatz (13) ausgebildet ist, die zur Auflage eines Trägerstreifens für Kabel und Leuchtdioden (19) eines aktiv leuchtenden Leuchtwegesystems bestimmt sind, und wobei der die Leuchtdioden (19) abdeckende Abdeckstreifen (20) in einer Nut (7) am oberen Halteschenkel (6) und zwischen einem Steg (10) und einem Vorsprung (11) am unteren Halteschenkel (8) festklemmbar ist, **dadurch gekennzeichnet, daß** auf der Außenseite des Abdeckstreifens (20) eine einseitig verspiegelte Folie (22) angeordnet ist, durch die das Licht der Leuchtdioden (19) bei Aktivierung des aktiv leuchtenden Leuchtwegesystems einseitig durchscheint, und jeder Leuchtdiode (19) eine Linse (21) zugeordnet ist, die in dem Abdeckstreifen (20) des aktiv leuchtenden Leuchtwegesystems angeordnet ist.

## Claims

1. Device for forming actively illuminating light path systems using a receiving profile generally U-shaped in cross-section, with a clamping device formed on the lateral support legs for supporting a cover strip of an actively illuminating light path system, and a recess for receiving cables and light emitting diodes to form an actively illuminating light path system in which two webs (16, 17) are arranged between the two support legs (6, 8) of the receiving profile (3) spaced apart parallel with each other and parallel with the outer end section of one of the support legs (8), which webs form a recess (12) in which a shoulder (13) is formed on each of the webs (16, 17), which are intended to provide a support for a support strip for cables and light emitting diodes (19) of an actively illuminating light path system, and wherein the cover strip (20) covering the light emitting diodes (19) can be clamped in a groove (7) on the upper support leg (6) and between a web (10) and a projection (11) on the lower support leg (8), **characterised in that** a foil (22) mirrored on one side is arranged on the outside of the cover strip (20), through which foil (22) the light from the light emitting diodes (19) shines unilaterally when the actively illuminating light path system is activated, and **in that** a lens (21), which is arranged in the cover strip (20) of the actively illuminating light path system, is assigned to each light emitting diode (19).

## Revendications

1. Dispositif de réalisation de systèmes de chemins lumineux à éclairage actif en utilisant un profilé récepteur d'une section transversale de manière générale en forme de U, comportant un dispositif de fixation réalisé sur les branches de retenue latérales pour supporter une bande de recouvrement d'un système de chemin lumineux à éclairage actif et un évidement destiné à recevoir des câbles et des diodes électroluminescentes pour réaliser un système de chemin lumineux à éclairage actif, dans lequel, entre les deux branches de retenue (6, 8) du profilé récepteur (3), espacées parallèlement entre elles et parallèlement à la section terminale extérieure d'une des branches de retenue (8), sont disposées deux traverses (16, 17) constituant un évidement (12) dans lequel est réalisé au niveau des traverses (16, 17) respectivement un talon (13) qui est destiné à l'appui d'une bande porteuse pour des câbles et diodes électroluminescentes (19) d'un système de chemin lumineux à éclairage actif et dans lequel les bandes de recouvrement (20) recouvrant les diodes électroluminescentes (19) peuvent être fixées dans une rainure (7) de la branche de retenue supérieure (6) et entre une traverse (10) et une saillie (11) de la branche de retenue inférieure (8), **caractérisé en ce que**, sur le côté extérieur de la bande de recouvrement (20), est disposé un film (22) réfléchissant d'un côté à travers lequel la lumière des diodes électroluminescentes (19) brille d'un côté en cas d'activation du système de chemin lumineux à éclairage actif et à chaque diode électroluminescente (19) est associée une lentille (21) qui est disposée dans la bande de recouvrement (20) du système de chemin lumineux à éclairage actif.
